# EUROPÄISCHE PATENTSCHRIFT

(11) **EP 3 541 659 B1**
(45) Veröffentlichungstag und Bekanntmachung des Hinweises auf die Patenterteilung: **28.08.2024**
(21) Anmeldenummer: 17803868.3
(22) Anmeldetag: 15.11.2017
(51) Int. Cl.: B60Q 1/00, B60Q 1/115

(54) **VERFAHREN ZUR EINSTELLUNG DER WINKELLAGE DER OPTISCHEN ACHSE EINES SCHEINWERFERS EINES KRAFTFAHRZEUGS UND BELEUCHTUNGSEINRICHTUNG DES KRAFTFAHRZEUGS**
METHOD FOR ADJUSTING THE ANGULAR POSITION OF THE OPTICAL AXIS OF A HEADLAMP OF A MOTOR VEHICLE, AND ILLUMINATION DEVICE OF THE MOTOR VEHICLE
PROCÉDÉ DE RÉGLAGE DE LA POSITION ANGULAIRE DE L'AXE OPTIQUE D'UN PROJECTEUR D'UN VÉHICULE AUTOMOBILE ET SYSTÈME D'ÉCLAIRAGE DU VÉHICULE AUTOMOBILE

(30) Priorität: 16.11.2016 DE 102016122066
(43) Veröffentlichungstag der Anmeldung: 25.09.2019
(73) Patentinhaber: Marelli Automotive Lighting Reutlingen (Germany) GmbH, 72762 Reutlingen (DE)
(72) Erfinder: BACCARIN, Davide, 72762 Reutlingen (DE); WELSNER, Stefan, 72762 Reutlingen (DE); LEITNER, Gabor, 72622 Nürtingen (DE)
(74) Vertreter: DREISS Patentanwälte PartG mbB
(86) Internationale Anmeldenummer: PCT/EP2017/079318
(87) Internationale Veröffentlichungsnummer: WO 2018/091529

(56) Entgegenhaltungen:
- EP-A1- 2 963 385
- EP-A2- 1 433 655
- WO-A2-2010/004017
- WO-A2-2015/032795
- CN-A- 104 802 697
- DE-A1- 102005 043 058
- DE-A1- 102011 081 395
- DE-A1- 102011 109 434
- DE-A1- 102014 204 407
- JP-A- 2013 193 644
- US-A1- 2004 105 272
- SAWICKI MAREK ET AL: "MEMS sensors signal preprocessing for vehicle monitoring systems", 2013 SIGNAL PROCESSING: ALGORITHMS, ARCHITECTURES, ARRANGEMENTS, AND APPLICATIONS (SPA), POZNAN UNIV OF TECHNOLOGY, 26 September 2013 (2013-09-26), pages 349 - 353, XP032550276, ISSN: 2326-0262, [retrieved on 20140113]
- ANONYMOUS: "Gyroscope - Wikipedia", 10 November 2016 (2016-11-10), XP055450842, Retrieved from the Internet <URL:https://en.wikipedia.org/w/index.php?title=Gyroscope&oldid=748816004#MEMS> [retrieved on 20180213]
- ANONYMOUS: "Vibrating structure gyroscope - Wikipedia", 10 November 2016 (2016-11-10), XP055450951, Retrieved from the Internet <URL:https://en.wikipedia.org/w/index.php?title=Vibrating_structure_gyroscope&oldid=748809391#Automotive> [retrieved on 20180214]

## Beschreibung

Die Erfindung betrifft ein Verfahren und eine Beleuchtungseinrichtung, die konfiguriert ist, ein solches Verfahren durchzuführen.

DE 10 2011 109434 A1 betrifft ein Verfahren zum Konstanthalten einer Lichtemissionsrichtung eines Leuchtmoduls eines Fahrzeugs bei einer Fahrzeugkarosseriebewegung, die eine Bewegung des Leuchtmoduls hervorruft. Zumindest eine Fahrzeugkarosseriebewegung wird kompensiert. Die Kompensation der Bewegung des Leuchtmoduls erfolgt über eine Steuerung von in dem Leuchtmodul angeordneten Lichtquellen. Eine Lage des Leuchtmoduls wird in einem Istwert erfasst und mit einem Sollwert einer Abstrahlrichtung des Leuchtmoduls verglichen. Ein Stellsignal für die Steuerung wird ermittelt.

SAWICKI MAREK ET AL: "MEMS sensors Signal preprocessing for vehicle monitoring Systems", 2013 SIGNAL PROCESSING: ALGORITHMS, ARCHITEGTURES, ARRANGEMENTS, AND APPLICATIONS (SPA), POZNAN UNIV OF TECHNOLOGY, 26. September 2013 (2013-09-26), Seiten 349 353, offenbart ein Verfahren, bei dem ein MEMS-Beschleunigungsmesser und ein MEMS-Gyroskop zur Anwendung kommen. Signale von horizontalen Achsen des Gyroskops werden verwendet, um Winkel einer Längs- und Querneigung eines Fahrzeugs im Verhältnis zur Normalfläche zum Gravitationsvektor zu bestimmen. Diese Winkel werden durch Integration des Winkelgeschwindigkeitssignals für jede Achse bestimmt.

Aus der DE 10 2014 204 407 A1, der EP 2 963 385 A1, der JP 2013 193 644 A, der US 2004 105272 A1, der DE 10 2011 081 395 A1 und der CN 104 802 697 A sind weitere Verfahren und Beleuchtungseinrichtungen bekannt. Aus der WO 2016 013 419 A1 ist es bekannt, eine Information über eine Geschwindigkeitsänderung zu benutzen, um daraus resultierende Änderungen der Istwinkellage der optischen Achse des Scheinwerfers auszugleichen. Dabei wird das Neigungsverhalten des Fahrzeuges in Folge der Geschwindigkeitsänderung durch ein Näherungsmodell des Verhaltens bei Geschwindigkeitsänderungen beschrieben. Die Istwinkellage des Fahrzeuges wird nicht durch reale Messungen bestimmt.

Des Weiteren sind sowohl Verfahren bekannt, bei denen die optische Achse der Scheinwerfer eines Kraftfahrzeugs manuell eingestellt wird, als auch Verfahren, die mit einem Achshöhensignal arbeiten, wobei das Achshöhensignal an einer oder zwei Fahrzeugachsen ermittelt wird, womit die Einfederung des Fahrzeugs sich in dem Achshöhensignal abbildet. Weiterhin sind Verfahren bekannt, bei denen die optische Achse des Scheinwerfers bei voller Betätigung eines Gas- oder Bremspedals um einen vorbestimmten Wert eingestellt wird.

Heutige Scheinwerfer nutzen in der Regel mehrere Lichtquellen zur Erzeugung spezifischer Lichtverteilungen. Die neuesten Entwicklungen in diesem Bereich gehen in Richtung sogenannter hochauflösender Systeme, insbesondere hin zu Matrixscheinwerfersystemen, die auf Techniken wie DMD (digital miror device), LCD (liquid crystal display), LCOS (liquid crystal on silicon), µAFS (mehrere hundert LEDs auf einem Chip) und Laser-scanning-Systemen basieren. Damit lassen sich nicht nur spezifischere und höher auflösende Lichtverteilungen einstellen, sondern auch Lichtelemente auf die Straße projizieren, die den Fahrer unterstützen sollen. Ein beispielhaftes System ist ein "Lane Depature Warning System", welches durch das hochauflösende Matrixsystem kritische Straßenmarkierungen für den Fahrer hervorhebt. Solche Systeme sind jedoch besonders anfällig für eine Veränderung der Winkellage der optischen Achse relativ zur Fahrbahn, die durch die Dynamik des fahrenden Kraftfahrzeuges hervorgerufen werden.

Aufgabe der Erfindung ist es, die Einstellung der Sollwinkellage der optischen Achse eines Scheinwerfers eines Kraftfahrzeugs zu verbessern. Insbesondere soll die Einstellung dazu genutzt werden, die Winkellage der optischen Achse des Scheinwerfers relativ zur Fahrbahn konstant zu halten.

Diese Aufgabe wird durch ein Verfahren nach dem Anspruch 1 sowie durch eine Beleuchtungseinrichtung nach Vorrichtungsanspruch 8 gelöst.

Dadurch, dass mittels eines mindestens einachsigen MEMS-Gyroskops (MEMS = micro electromechanical system) eine Winkelgeschwindigkeit der optischen Achse ermittelt wird, kann eine Istwinkellage der Fahrzeugachsen, d.h. der Achsen eines fest mit dem gefederten Teil des Kraftfahrzeugs verbundenen Koordinatensystems sowie der Scheinwerfer abgeleitet werden. Somit kann eine Steuerungseinheit durch Ausgabe von Stellsignalen eine Einstellung der Sollwinkellage der optischen Achse des Lichtmodules veranlassen, insbesondere um die Winkellage der optischen Achse relativ zur Fahrbahn konstant zu halten.

Vorteile der Verwendung von Gyroskopen sind eine größere Bandbreite von Frequenzen von Bewegungen des Kraftfahrzeuges, deren Auswirkung auf die Lichtverteilungen kompensiert werden können. Vorteil ist auch eine geringere Ansprechverzögerung (latency) des Kompensationsverfahrens als bei Achshöhensensoren, die weit entfernt voneinander und von den Scheinwerfern im Kraftfahrzeug angeordnet sind und über ein Bussystem des Kraftfahrzeugs miteinander verbunden sind.

Dadurch werden erfindungsgemäß auch die Auswirkungen von Vibrationen relativ hoher Frequenz auf die Lichtverteilung durch das gyroskopgesteuerte und hochauflösende Scheinwerfersystem kompensiert.

Dadurch, dass die optische Achse in Abhängigkeit von der Istwinkellage der Längsachse des Kraftfahrzeugs relativ zur Fahrbahn und in Abhängigkeit von der Winkelgeschwindigkeit eingestellt wird, kann die Lage der optischen Achse präziser eingestellt werden, als dies mit dem bisherigen Stand der Technik zur Einstellung der Lage der optischen Achse möglich ist.

Gleichwohl erfolgt die Einstellung mit einer Geschwindigkeit, die es erlaubt, auch Einflüsse von Unebenheiten der Fahrbahn oder Vibrationen des Fahrzeuges bei fahrendem Kraftfahrzeug zu kompensieren. Dies stellt ein vorteilhaftes Anwendungsszenario dar, insbesondere im Hinblick auf eine Verwendung von Scheinwerfern mit hoher Auflösung, welche mit Hilfe von Algorithmen Informationen für den Fahrer auf die Straße projizieren oder spezifische Lichtverteilungen erzeugen, welche unter anderem Blendungen verhindern. Diese Verfahren sind besonders anfällig für eine Veränderung der Winkellage der optischen Achse relativ zur Fahrbahn, welche hier besonders stören würden. Beispiele solcher Scheinwerfer sind LED-MatrixScheinwerfer. Ebenfalls sehr anfällig sind Systeme mit hoher Auflösung, beispielhaft seien DMD, LCD, LCOS, µAFS und Laserscanning-Systeme, genannt, welche teilweise auch Symbole auf die Fahrbahn als Information für den Fahrer projizieren können. Denkbar ist auch eine Verwendung bei klassischen Lichtmodulen mit schneller vertikaler Verstellung.

In einer einfachen Ausführungsform wird die optische Achse in Abhängigkeit von einer durch nur ein Ein-Achsen-MEMS-Gyroskop ermittelten Winkelgeschwindigkeit eingestellt, wobei die Achse des Ein-Achsen-MEMS-Gyroskops parallel zur Fahrzeugquerachse liegt. Somit kann eine Steuerungseinheit eine Einstellung der optischen Achse des Scheinwerfer veranlassen, insbesondere um die Winkellage der Optischen Achse zur Fahrbahn konstant zu halten.

In einer vorteilhaften Ausführungsform wird die optische Achse in Abhängigkeit von durch ein Zwei-Achsen-MEMS-Gyroskop ermittelten Winkelgeschwindigkeiten eingestellt, wobei die durch die beiden Achsen des Zwei-Achsen-MEMS-Gyroskop aufgespannte Ebene parallel zur Fahrzeugquerachse liegt. Die beiden Achsen des Zwei-Achsen-MEMS-Gyroskops müssen hierbei nicht notwendigerweise senkrecht aufeinander stehen und die von den beiden Achsen des Zwei-Achsen-MEMS-Gyroskops aufgespannte Ebene muss parallel zur Fahrzeugquerachse liegen. Hierdurch ist es vorteilhaft möglich, die Istwinkellage der optischen Achse relativ zur Fahrbahn in Richtung einer weiteren Fahrzeugkoordinatenachse zu bestimmen und in dieser durch eine Steuerungseinheit eine Steuerungsgröße zur Korrektur der Winkellage der optischen Achse in Richtung dieser zusätzlichen Achse auszugeben.

In einer vorteilhaften Ausführungsform wird die optische Achse in Abhängigkeit von durch ein Drei-Achsen-MEMS-Gyroskop ermittelten Winkelgeschwindigkeiten eingestellt. Die drei Achsen des Drei-Achsen-MEMS-Gyroskops müssen nicht notwendigerweise senkrecht aufeinander stehen. Hierdurch ist es vorteilhaft möglich, die Istwinkellage der optischen Achse relativ zur Fahrbahn in Richtung aller Fahrzeugkoordinatenachsen zu bestimmen und in diesen durch eine Steuerungseinheit eine Steuerungsgröße zur Korrektur der Winkellage der optischen Achse in Richtung aller Achsen auszugeben.

In einer vorteilhaften Ausführungsform werden die Winkelgeschwindigkeiten mittels einer vorab abgespeicherten Einbaulage des MEMS-Gyroskops bezüglich der Kraftfahrzeugachsen lagerichtig ermittelt. Hierbei wird eine Koordinatentransformation der Gyroskopachsen auf die Kraftfahrzeugsachsen durchgeführt. Vorteilhaft wird damit die Einbaulage des Gyroskops im Rahmen der jeweils formulierten Einschränkungen unerheblich. Dadurch ergibt sich eine große Freiheit bei der Wahl des Einbauortes und der Einbaulage des Gyroskops.

Die Achshöhensensoren können nur Änderungen der Längsneigung (pitch) und der Querneigung (roll) detektieren, während ein 2- oder 3-Achsen Gyroskop auch Änderungen des Gierwinkels detektiert.

Normalerweise weisen hochauflösende Scheinwerfersysteme zwei Scheinwerfer auf, die zusammenwirken, um eine gemeinsame, spezifische Lichtverteilung (mit unterschiedlichen Umrissen, Symbolen, ....) auf der Straße zu erzeugen. Eine Änderung der Querneigung wird die optischen Achsen der beiden Scheinwerfer unterschiedlich beeinflussen und damit möglicherweise eine Verzerrung der von beiden Scheinwerfern gemeinsam erzeugten Lichtverteilung verursachen. Durch Detektieren des Nickwinkels (pitch), der Querneigung (roll) und des Gierwinkels (yaw) mit einem dreiachsigen Gyroskop, oder von pitch und roll Änderungen mit einem zweiachsigen oder dreiachsigen Gyroskop kann diese Verzerrung kompensiert werden.

Erfindungsgemäß werden die Winkelgeschwindigkeitssignale vor der Zuführung an eine Recheneinheit über die Zeit zu einem Winkel integriert, wobei die Integration sowohl vor als auch nach einer Koordinatentransformation erfolgen kann. Mit anderen Worten: Die Reihenfolge von Integration und Koordinatentransformation ist vertauschbar. Vorteilhaft ergeben sich hierdurch größere Freiheiten bei der Wahl der Steuerungseinheit. Weiterhin sind hierdurch Nachrüstlösungen für vorhandene Systeme denkbar.

In einer vorteilhaften Ausführungsform werden die Signale vor der Verarbeitung innerhalb der Steuerungseinheit gefiltert, wobei die Filterung jeweils sowohl vor als auch nach einer Koordinatentransformation und/oder Integration erfolgen kann und nicht auf ein einzelnes Filterelement begrenzt ist. Vorteilhaft werden hierdurch die Signale herausgefiltert, nach welchen sich die Steuerungseinheit nicht einstellen soll, wodurch die Einstellung der Winkellage der optischen Achse zusätzlich verbessert wird. In einer vorteilhaften Ausführungsform wird die Einstellung der Sollwinkellage der optischen Achse des Scheinwerfers durch die Steuerungseinheit nach Kombination mit einer Steuerungsgröße und/oder Fahrzeugdaten durchgeführt, die aus alternativen Systemen zur Bestimmung der Istwinkellage bereitgestellt werden. Dies hat den Vorteil, dass die Neuerung als Ergänzung zu bereits vorhandenen System genutzt werden kann, welche eine Einstellung der optischen Achse nach weiteren Kriterien ermöglichen. Weiterhin sind hierdurch Nachrüstlösungen für vorhandene Systeme denkbar, bei denen die von den bereits vorhandenen Systemen generierte Steuerungsgröße durch die Steuerungseinheit zu einer neuen Steuerungsgröße des Scheinwerfers unter Einbezug der Gyroskopsignale verändert wird.

Vorteilhafte Weiterbildungen sind in den Unteransprüchen angegeben. Für die Erfindung wichtige Merkmale finden sich in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Nachfolgend werden beispielhafte Ausführungsformen der Erfindung unter Bezugnahme auf die Zeichnung erläutert. In der Zeichnung zeigen:
- Figur 1: eine Funktionsblockdarstellung der Erfindung, die sowohl Verfahrensaspekte als auch Vorrichtungsaspekte verdeutlicht
- Figur 2: ein schematisches Blockdiagramm des Verfahrens.
- Figur 3: Fahrzeugkoordinatensystem mit den zugehörigen Winkelgeschwindigkeiten und Messachsen des Gyroskopes

Im Folgenden erhalten Istwinkellage und Sollwinkellage die gleiche Bezeichnung θ, da die Messung der Istwinkellage eine Einstellung der Sollwinkellage zur Folge hat, welche damit die neue Istwinkellage bildet. Des Weiteren ist die Winkellage θ in Abhängigkeit des gewählten MEMS-Gyroskopes als Menge von Winkellagen der optischen Achse in ein, zwei oder drei Raumrichtungen, welche durch die Fahrzeugkoordinatenachsen beschrieben werden, relativ zur Fahrbahn zu verstehen.

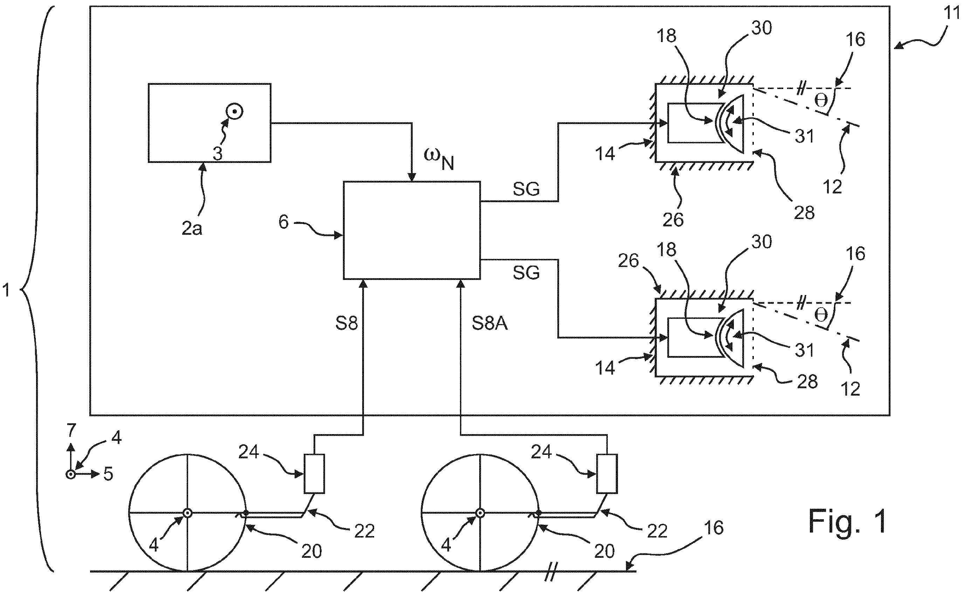

Aus Gründen der Übersichtlichkeit behandelt die Funktionsblockdarstellung der Figur 1 die Verwendung eines Ein-Achsen-MEMS-Gyroskops 2a mit einer Achse 3 parallel zu einer Fahrzeugquerachse. Das im Folgenden erläuterte Schema gilt mit entsprechenden Anpassungen auch bei der Verwendung eines Zwei-Achsen-MEMS-Gyroskops und eines Drei-Achsen-MEMS-Gyroskops. Von STMicroelectronics, Maxim Integrated und Bosch sind Gyroskope zur Verwendung innerhalb eines Kraftfahrzeuges bekannt.

Das Ein-Achsen-MEMS-Gyroskop 2a besitzt eine parallel zur Richtung 4 der Fahrzeugquerachse liegende Achse 3 und generiert ein Winkelgeschwindigkeitssignal ω_{N}, das zum Beispiel durch eine Beschleunigung oder eine Verzögerung des Kraftfahrzeuges oder durch eine Vibration hervorgerufen wird und das der Steuerungseinheit 6 zugeführt wird. Die Fahrzeugquerachse 4 steht senkrecht auf der Zeichnungsebene. Die Zeichnungsebene wird durch die Richtung 5 einer Fahrzeuglängsachse und die Richtung 7 einer Fahrzeughochachse aufgespannt. Zusätzlich zum Winkelgeschwindigkeitssignal ω_{N} kann die Steuerungseinheit 6 weitere Fahrzeugsignale S8, S8a erhalten, um diese mit dem Winkelgeschwindigkeitssignal ω_{N} durch Rechenoperationen zu einer Steuerungsgröße SG zu verarbeiten, welche die Istwinkelwinkellage θ der Optischen Achse 12 des Scheinwerfers 14 relativ zur Fahrbahn 16 mit Hilfe einer Stelleinheit 18 auf eine Sollwinkellage einstellt. In dieser gezeigten beispielhaften Ausführung sind die Räder 20 des Fahrzeuges jeweils durch mechanische Kopplung 22 mit einem Niveaugeber 24 verbunden, welche die Einfederung des Fahrzeuges als Einfederungssignal S8, S8a an die Steuerungseinheit 6 weitergeben. Aus den Signalen ω_{N}, S8, S8a berechnet die Steuerungseinheit 6 die Steuerungsgröße SG zur Einstellung der Winkellage θ der optischen Achse 12 des Scheinwerfers 14 relativ zur Fahrbahn 16.

Die Niveaugeber 24 dienen zur statischen Einstellung der Leuchtweite, das heißt, das Fahrzeug steht, der Fahrer lädt vielleicht etwas in das Fahrzeug ein steigt ein. Jetzt wird entweder manuell oder erfindungsgemäß über die Niveaugeber 24 des Fahrzeugs die optische Achse des Scheinwerfers eingestellt. Mit dem Losfahren übernimmt dann das erfindungsgemäße Verfahren unter Verwendung des oder der Gyroskope 2a (oder 2b, oder 2c, die weiter unten erläutert werden) die Steuerung des Scheinwerfers 30, die bei einachsigen Gyroskopen 2a zum Beispiel in einer automatischen Leuchtweitenregelung besteht. Das Gyroskop 2a erfasst dann bevorzugt insbesondere die Vibrationen um die Querachse 4 des Scheinwerfers herum.

Bei einachsigen Gyroskopen 2a sind zwei Fälle zu unterscheiden: Ein erster Fall betrifft das konventionelle Abblendlicht, z.B. ein LED Abblendlicht: Hier werden mit dem Verfahren Motoren als Stelleinheiten 18 angesteuert, die die Achse des Scheinwerfers in der korrekten Lage halten. Damit können auch Nachrüstlösungen definiert werden.

Ein zweiter Fall betrifft hochauflösende Matrixscheinwerfersysteme: Diese Systeme besitzen zum Teil keine beweglichen Teile. Die Regelung der Leuchtweite erfolgt über ein Verschieben der Lichtverteilung auf dem "Display" (DMD, LCD, LCOS, µAFS, Scanner usw.).

Fig. 1 zeigt insbesondere eine Beleuchtungseinrichtung 11 innerhalb eines Kraftfahrzeuges 1 mit zwei Scheinwerfern 14. Jeder der Scheinwerfer 14 weist ein Gehäuse 26 mit einer vorderen, transparenten Abdeckscheibe 28 und mindestens einem Lichtmodul 30 innerhalb des Gehäuses 26 auf. Hierbei weist mindestens eines der Lichtmodule 30 innerhalb des Scheinwerfers 14 eine Stelleinheit 18 auf, die zum Beispiel ein Servomotor ist, der eine Lichtquelle mit optischem Element 31 verstellt.

In einer besonders bevorzugten Ausgestaltung ist das Lichtmodul 30 ein DMD Lichtmodul. Ein solches Lichtmodul weist hunderte von Mikrospiegelaktoren auf, die in der Regel aus matrixförmig angeordneten Einzelelementen bestehen, bei denen der einzelne Mikrospiegel aus einer verkippbaren spiegelnden Fläche mit einer Kantenlänge von wenigen Mikrometern besteht. Ihre Stellung wird durch die Kraftwirkung elektrostatischer Felder hervorgerufen. Jeder Mikrospiegel lässt sich in seinem Winkel einzeln verstellen und besitzt in der Regel zwei stabile Endzustände, zwischen denen er innerhalb einer Sekunde bis zu mehrere 1000-mal wechseln kann. Die Mikrospiegelanordnung wird von einer Lichtquelle beleuchtet. Je nach Ansteuerung der individuellen Mikrospiegel trägt das an ihnen reflektierte Licht der Lichtquelle zu der erwünschten Lichtverteilung bei oder wird in einen Bereich abgelenkt, in dem es zumindest nicht stört. Durch Abbildung der Gesamtheit der Mikrospiegeloberflächen wird eine Lichtverteilung erzeugt, die sich aus den Bildern der entsprechend angesteuerten Mikrospiegel zusammensetzt. Eine solche Lichtverteilung ist aufgrund der Vielzahl der Mikrospiegel eine hochauflösende Lichtverteilung, weil in ihr jeweils das Bild einzelner Spiegel hell oder dunkel geschaltet werden kann. Die Stelleinheit 18 ist in diesem Ausführungsbeispiel die Gesamtheit der Mikrospiegelaktoren und eine Optik 31 stellt jeweils die Gesamtheit der Mikrospiegel mit Lichtquelle dar.

Wie bereits erwähnt, existieren andere hochauflösende Lichtmodule zum Beispiel LCD, LCOS, und Laserscanning-Systeme. Mit den hochauflösenden Lichtmodulen lassen sich teilweise auch Symbole auf die Fahrbahn als Information für den Fahrer projizieren.

Bei diesen hochauflösenden Systemen lassen sich mit einer bevorzugt digitalen Filterung von Gyroskopsignalen sämtliche Vorteile der Verwendung von Gyroskopen verwirklichen.

Die Lage und/oder Winkel der optischen Elemente 31 (oder von deren Teilen wie den Mikrospiegeln eines DMD Moduls) im Scheinwerfer ist durch die mit den optischen Elementen 31 gekoppelten Stelleinheiten 18 innerhalb des Scheinwerfers 14 einstellbar. Die Stelleinheiten 18 stellen in Folge der Ansteuerung mit der Steuerungsgröße 10 die Sollwinkellage θ der optischen Achse 12 des Lichtmoduls ein. Die optische Achse 12 des Lichtmoduls 30 ist mit der optischen Achse 12 des Scheinwerfers 14 identisch.

Bevorzugt wird die Winkellage θ der optischen Achse 12 mit Hilfe von Gyroskopsignalen relativ zur Fahrbahn 16 stabilisiert und somit weitgehend konstant gehalten. Es ist dabei unerheblich, welche optischen Elemente die optische Achse 12 definieren, wobei die Einstellung der Winkellage θ der optischen Achse 12 bevorzugt bei Beleuchtungseinrichtungen mit hoher Auflösung und/oder bei auf die Fahrbahn projizierenden Projektionssystemen genutzt wird.

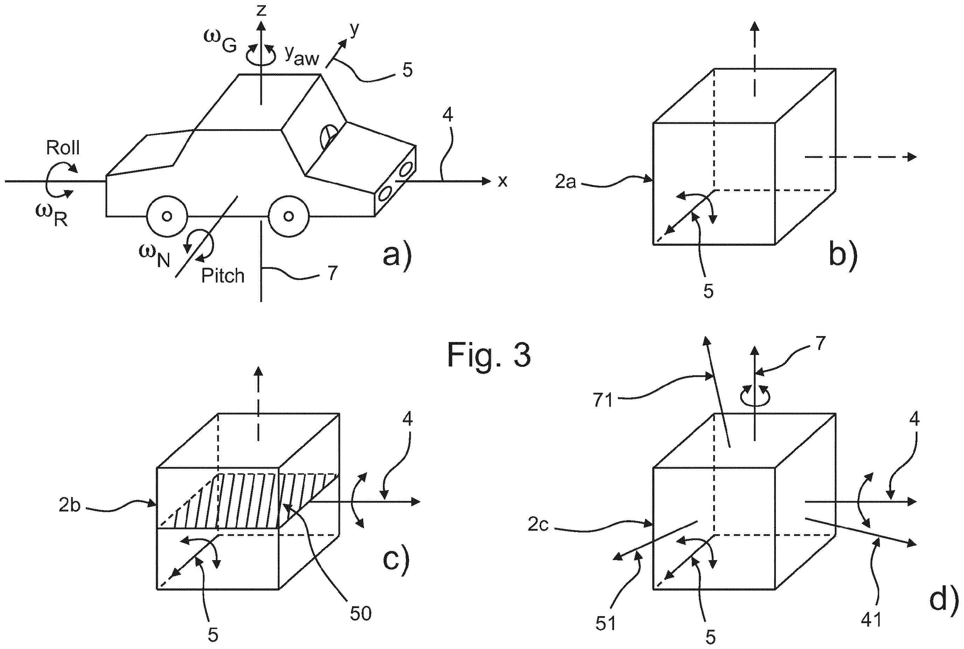

In einer bevorzugten Ausführungsform werden durch ein Zwei-Achsen-MEMS-Gyroskop 2b oder ein Drei-Achsen-MEMS-Gyroskop 2c, welche bei entsprechender Verwendung Das Ein-Achsen-MEMS-Gyroskop 2a innerhalb des Figur 1 ersetzen, zusätzliche Signale der Winkelgeschwindigkeiten ω_{R} und ω_{G} bereitgestellt (vergleiche Figur 3), welche ebenfalls mit den Fahrzeugdaten S8, S8a kombiniert werden können, wodurch sich eine Möglichkeit zur Einstellung der Winkellage der optischen Achse des Scheinwerfers relativ zu weiteren Raumrichtungen ergibt. Ein zweiachsiges Gyroskop ermöglicht (bei passender Einbaulage) insbesondere eine Kompensation von Rotationsvibrationen um die Querachse (pitch) und die Längsachse (roll) oder um die Querachse (pitch) und die Hochachse (yaw). Ein dreiachsiges Gyroskop ermöglicht insbesondere eine Kompensation von Rotationsvibrationen um alle drei Achsen (pitch, roll und yaw) und ist, wegen der Möglichkeit von rechnerischen Koordinatentransformationen, nicht an bestimmte Einbaulagen gebunden

Hierbei gilt zu beachten, dass der Gegenstand der Figur 1 lediglich ein Ausführungsbeispiel darstellt. Das System lässt sich als Ergänzung zu einer bereits bestehenden Lösung zur Einstellung der Sollwinkellage θ der optischen Achse 12 des Lichtmodules 30, beispielhaft in der Figur 1 durch eine Einstellung in Folge der Niveaugebersignale 24 gegeben, nutzen. Gleichwohl ist es auch als eigenständiges System zur Einstellung der Sollwinkellage θ der optischen Achse 12 verwendbar. Selbstverständlich ist das System auch in Kombination mit anderen Möglichkeiten zur Einstellung der Sollwinkellage θ der optischen Achse 12 der Lichtmodule 30 nutzbar, zum Beispiel in Kombination mit einer auf Beschleunigungssensoren basierenden dynamischen automatischen Leuchtweitenregelung (Dynamic AVAC (automatic vertical aim control).

Mit dem hochaufgelösten Matrixscheinwerfer ist jetzt auch die Kompensation einer Rollbewegung des Fahrzeugs möglich wenn die Lichtverteilung entsprechend einem Sensorsignal gedreht wird. Ein Anwendungsfall für die hochaufgelösten Matrixsysteme besteht darin den Fahrer durch projizierte Lichtelemente beim Fahren zu unterstützen. Damit die Lichtverteilung durch die Dynamik des Fahrzeugs nicht verändert wird, muss die Lage des Fahrzeugs bzw. des Scheinwerfermoduls im Raum schnell und genau Festgestellt werden. Problematisch sind dabei die drei Rotationsfreiheitsgrade des Fahrzeugs, die Translationsfreiheitsgrade sind dafür unkritisch. Die Gyroskope sind als Sensoren schnell genug und genau genug, um das Verhalten des Fahrzeugs zu detektieren und die Lichtverteilung des hochaufgelösten Matrixsystems entsprechend der Fahrzeugbewegung anzupassen. Damit kann zum Beispiel bei einem "Lane Departure Warning System" die helle Beleuchtung kritischer Straßenmarkierungen durch das hochauflösende Matrixsystem aufrechterhalten werden. Das einachsige Gyroskop ermöglicht (bei passender Einbaulage) insbesondere eine Kompensation von Rotationsvibrationen um die Querachse.

Selbstverständlich ist es möglich, eine Steuerungseinheit 6 sowohl innerhalb als auch außerhalb des Scheinwerfers 14 anzuordnen, wobei das Gyroskop 2 hierbei einen Bestandteil einer Steuerungseinheit 6 bilden kann mit mehreren Szenarien zur Anordnung von Steuerungseinheiten 6 und Gyroskopen 2. Es ist möglich, sowohl eine Steuerungseinheit 6 mit einem Gyroskop 2 zur Ansteuerung beider Frontscheinwerfer 14 zu verwenden als auch getrennte Steuerungseinheiten 6 für den jeweiligen Scheinwerfer 14 mit einem gemeinsamen Gyroskop 2 oder jeweils einzelnen Gyroskopen 2. Gleichwohl können die jeweils anzusteuernden Lichtmodule 30 innerhalb eines Scheinwerfers 14 durch gemeinsame oder getrennte Steuerungseinheiten 6 eingestellt werden, wobei die Steuerungseinheiten 6 die Daten von gemeinsamen Gyroskopen 2 oder alleinigen nutzen können. Selbstverständlich können auch beliebige Kombinationen der beschriebenen Ausgestaltungen gebildet werden. Bevorzugt werden die Gyroskope 2 hierbei nah an den Scheinwerfer 14 oder Lichtmodulen 30 angebracht. Die Integration der Gyroskope in die Steuerungseinheiten und deren Anordnung in oder an den Scheinwerfern trägt dazu bei, die Reaktionszeit (latency) des Systems zu verringern und eine Präzision der Messungen zu erhöhen. Dadurch wird eine genauere Information über die Istwinkellage erhalten, insbesondere auch dadurch, dass im Scheinwerfer auftretende zusätzliche Vibrationen erfasst werden..

Als Alternative zu der in der Figur 1 dargestellten Möglichkeit kann auch anstelle des Lichtmoduls 30 mit der Stelleinheit 18 bevorzugt ein hochaufgelöstes Matrixsystem, insbesondere ein DMD Lichtmodul verwendet werden. Hierbei erfolgt die Einstellung der optischen Achse nicht durch ein mechanisches System, sondern durch ein elektrisches System innerhalb des Lichtmoduls. Entsprechend lässt sich hiermit auch die Dynamik des Fahrzeugs kompensieren und die Lichtverteilung relativ konstant halten. Damit weisen auch eventuell auf die Fahrbahn projizierte Symbole keine Schlieren oder Vibrationen auf, sondern werden scharf auf diese abgebildet. Entsprechende Systeme können auch die Form der ausgestrahlten Lichtverteilung so verändern, dass diese die Scheinwerferbewegung kompensieren.

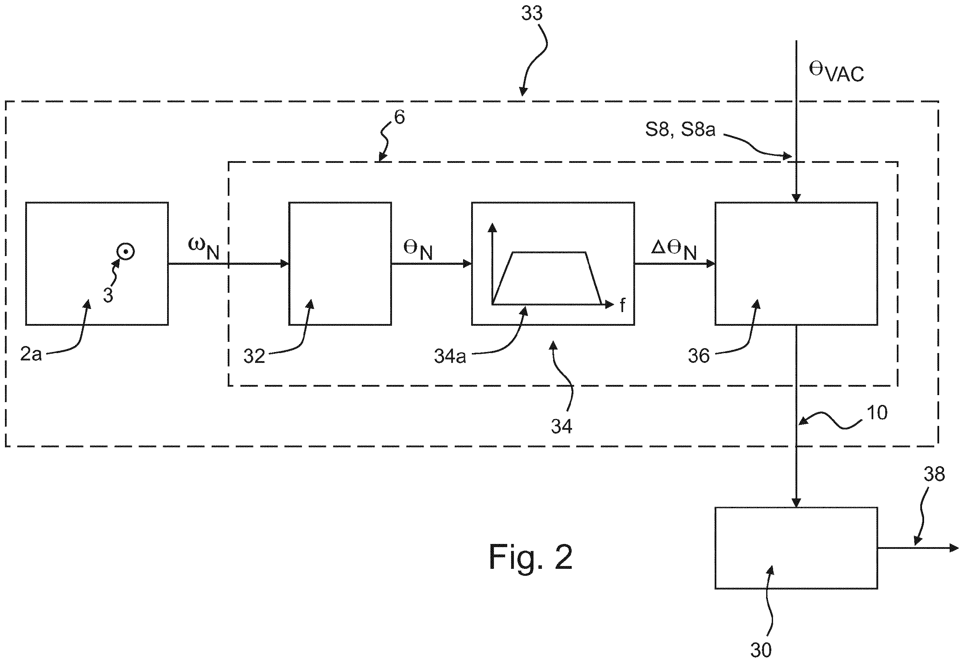

Figur 2 zeigt ein Blockdiagramm in schematischer Form. Aus Gründen der Übersichtlichkeit behandelt das schematische Blockdiagramm die Verwendung eines Ein-Achsen-MEMS-Gyroskops 2a. Das im Folgenden erläuterte Schema gilt mit entsprechenden Anpassungen auch bei der Verwendung eines Zwei-Achsen-MEMS-Gyroskops 2b und eines Drei-Achsen-MEMS-Gyroskops 2c, welche bei entsprechender Verwendung das Ein-Achsen-MEMS-Gyroskop 2a innerhalb des Blockdiagramms ersetzen.

Das Ein-Achsen-MEMS-Gyroskop 2a stellt ein Winkelgeschwindigkeitssignal bereit, dass die Winkelgeschwindigkeit ω_{N} um eine Fahrzeugquerachse 4 beschreibt. Ein Integrator 32 führt eine Integration der Winkelgeschwindigkeit ω_{N} über der Zeit durch und berechnet damit einen Winkel θ_{N}, der eine Istwinkellage θ_{N} der Fahrzeuglängsachse relativ zur Fahrbahn 16 beschreibt. Anschließend erfolgt eine Filterung der Winkelsignale durch einen Filter 34, der beispielhaft durch einen Bandpass 34a realisiert werden kann. Hierbei werden unerwünschte Signale herausgefiltert, welche für eine falsche Einstellung des Scheinwerfers 14 sorgen könnten. Diese unerwünschten Signale sind insbesondere hochfrequente Rauschanteile im Sensorsignal und niederfrequente Anteile im Sensorsignal, welche zum Beispiel durch einen Offsetfehler im Gyroskop verursacht werden. Der Filter erzeugt ein Winkelverschiebungssignal Δθ_{N}, welches von der Recheneinheit 36 gemeinsam mit einer Basiswinkeleinstellung θ_{VAC} des Scheinwerfers, welche von einem weiter unten erläuterten anderen System zur Einstellung der Sollwinkellage θ optischen Achse 12 und weiteren Fahrzeugdaten S8, S8a genutzt wird, um die optimale Ausrichtung der optischen Achse 12 zu berechnen. Die durch die Recheneinheit 36 berechnete Steuerungsgröße 10 wird dem Lichtmodul 30 zugeführt, welches sich entsprechend der berechneten Steuerungsgröße 10 einstellt, wodurch sich eine stabilisierte Lichtverteilung 38 ergibt.

Selbstverständlich ist es möglich, sowohl den Integrator 32 als auch den Filter 34 in die Recheneinheit 36 zu integrieren als auch ihre Reihenfolge innerhalb des schematischen Blockdiagrammes zu vertauschen, wobei eine Realisierung durch ein Softwaremodul bevorzugt ist.

Der Winkel θ_{VAC} ist eine der Recheneinheit 36 zuzuführende Größe. Er stellt dabei einen Basiswinkel dar, welcher von einem anderen System zur Einstellung der Sollwinkellage θ der optischen Achse 12 des Scheinwerfers 14 stammt, oder der sich in den bereits genannten Signalen S8, S8a abbildet. Beispielhaft sei eine manuelle Einstellung der Sollwinkellage θ der optischen Achse 12 zur Kompensation von Beladungseinflüssen genannt. Basiswinkelsignal θ_{VAC} und Winkelverschiebungssignal Δθ_{N} werden von der Recheneinheit 36 zu der Steuerungsgröße 10 verknüpft, beispielhaft durch Addition oder gewichtete Addition. Hiermit ist es möglich, die vorliegende Neuerung als Ergänzung einer bereits vorhandenen Vorrichtung zur Einstellung der Basiswinkellage zu verwenden.

Hierbei findet bevorzugt eine Arbeitsteilung zwischen den Systemen statt. Der Winkel θ_{VAC} ist eine statische Größe, welche bei ruhender Bewegung des Fahrzeuges eingestellt wird. Sobald das Fahrzeug in Bewegung ist, übernimmt die Steuerungseinheit 6 zusammen mit dem Ein-Achsen-MEMS-Gyroskop die Steuerung zur Einstellung Sollwinkellage θ der optischen Achse 12 des Scheinwerfers, insbesondere mit dem Ziel, diese konstant relativ zur Fahrbahn 16 zu halten.

Gleichwohl kann das System nicht erfindungsgemäß als alleiniges System zur Einstellung der Sollwinkellage θ der optischen Achse 12 im Rahmen der technischen Grenzen des Ein-Achsen-Gyroskops 2a dienen. Damit ist die Einstellung der Sollwinkellage θ der optischen Achse 12 sowohl alleine als auch in Ergänzung zu bereits vorhanden Systemen möglich.

Bevorzugt werden Steuerungseinheit 6 und Ein-Achsen-Gyroskop 2a auf einer gemeinsamen Leiterplatte 31 aufgebracht. Vorteilhaft wird hierdurch der notwendige Bauraum zur Realisierung des Verfahrens minimiert. In einer weiterführenden Realisierung kann diese Leiterplatte innerhalb eines Scheinwerfers montiert werden. Hierdurch ergeben sich genauere Messungen der Istwinkellage θ der optischen Achse 12 des Scheinwerfers 14. Weiterhin sind hierdurch Nachrüstlösungen für bestehende Systeme denkbar.

In einer bevorzugten Ausführungsform werden durch ein Zwei-Achsen-MEMS-Gyroskop 2b oder ein Drei-Achsen-MEMS-Gyroskop 2c zusätzliche Signale der Winkelgeschwindigkeiten ω_{R} und ω_{G} bereitgestellt werden, wodurch weitere Korrekturen der optischen Achse 12 in weitere Raumrichtungen ermöglicht werden. Hierbei kann es notwendig sein, die Gyroskopsignale auf ein Fahrzeugkoordinatensystem 3 zu transformieren. Die Transformation von dem Gyroskopkoordinatensystem auf das Fahrzeugkoordinatensystem 3 wird mit Hilfe eines Rechners und einer Speichereinheit durchgeführt, in welcher die Einbaulage des Gyroskops und die Transformationsgleichungen abgespeichert ist, wobei die Transformation der Signale zu einem beliebigen Zeitpunkt zwischen Generierung und Bereitstellung der korrigierten optischen Achse erfolgen kann als auch in die Recheneinheit 6 integriert werden kann.

Figur 3a zeigt das Fahrzeugkoordinatensystem analog zu DIN 8855 bestehend aus Längsachse 4, Querachse 5 und Vertikalachse 7. Hierbei kann das Gyroskop eine Winkelgeschwindigkeit ω_{R} um 4, eine Winkelgeschwindigkeit ω_{N} um 5 und eine Winkelgeschwindigkeit ω_{G} um 7 messen, welche einer Roll-, Nick- bzw. Gierbewegung entsprechen.

Figur 3b zeigt den Fall eines Ein-Achsen-MEMS-Gyroskopes 2a. In diesem wird die Nickbewegung durch die Winkelgeschwindigkeit ω_{N} ermittelt um die 5-Achse ermittelt. Hierbei muss die Messachse des Gyroskopes mit der Fahrzeugquerachse 5 zusammenfallen. Um die anderen Achsen erfolgt keine Messung, weshalb diese gestrichelt dargestellt sind.

Figur 3c zeigt eine bevorzugte Ausgestaltung des Zwei-Achsen-MEMS-Gyroskopes 2b, welches zusätzlich eine Rollbewegung des Fahrzeuges messen kann. Das Gierverhalten kann weiterhin nicht untersucht werden, weshalb die entsprechende Achse gestrichelt dargestellt ist. Im Falle des Zwei-Achsen-MEMS-Gyroskopes müssen die Messachsen nicht auf die Fahrzeugachsen 4 und 5 beschränkt sein, sondern können sich innerhalb der von 4 und 5 aufgespannten, schraffierten Fläche 50 befinden. Durch Koordinatentransformation lassen sich diese wieder auf das Fahrzeugkoordinatensystem transformieren. Des Weiteren ist eine Messung in Richtung einer beliebigen Kombination zweier Fahrzeugkoordinatenachsen möglich, wobei bevorzugt immer die Nickbewegung und weiterhin bevorzugt die Rollbewegung erfasst wird.

Figur 3d zeigt eine Ausgestaltung des Drei-Achsen-MEMS-Gyroskopes 2c. Alle Bewegung im allen Raumrichtungen können hiermit erfasst werden. Hierbei müssen die Messachsen nicht mit den Fahrzeugkoordinatenachsen 4,5 und 7 zusammenfallen, sondern können ein eigenes Koordinatensystem 41, 51 und 71 bilden, wobei durch Koordinatentransformation zwischen den beiden Koordinatensystemen gewechselt werden kann, so dass insbesondere die mit dem Drei-Achsen-MEMS-Gyroskop 2c erfassten Daten in das Koordinatensystem des Fahrzeugs umgerechnet werden können.

## Patentansprüche

1. Verfahren zur Einstellung einer Winkellage (θ) einer optischen Achse (12) eines Scheinwerfers (14) eines Kraftfahrzeugs(1), wobei das Verfahren ein erstes Verfahren zur statischen Einstellung einer Leuchtweite und ein zweites Verfahren unter Verwendung eines MEMS-Gyroskops (2) umfasst, wobei beim ersten Verfahren bei dem stehendem Kraftfahrzeug (1) von einem Niveaugeber (24) eine Einfederung des Kraftfahrzeugs (1) als Einfederungssignal (S8, S8a) an eine Steuerungseinheit (6) weitergeben wird, wobei die Steuerungseinheit (6) aus den Einfederungssignalen (S8, S8a) eine Steuerungsgröße (SG) zur Einstellung der Winkellage (Θ) der optischen Achse (12) des Scheinwerfers (14) relativ zur Fahrbahn (16) berechnet, wobei mit einem Losfahren des Kraftfahrzeugs (1) dann das zweite Verfahren unter Verwendung des MEMS-Gyroskops durchgeführt wird, bei dem die optische Achse (12) des Scheinwerfers (14) in Abhängigkeit von einer Istwinkellage (θ) des Scheinwerfers (14) relativ zu der Fahrbahn (16) eingestellt wird, wobei die Istwinkellage (θ) in Abhängigkeit von einer Winkelgeschwindigkeit (ω) der optischen Achse (12) ermittelt wird, wobei die Winkelgeschwindigkeit (w) der optischen Achse (12) mittels des bezüglich des Scheinwerfers (14) festgelegten mindestens einachsigen MEMS-Gyroskops (2) ermittelt wird, wobei die Beleuchtungseinrichtung wenigstens einen Scheinwerfer aufweist, der dazu eingerichtet ist, eine hochauflösende Lichtverteilung zu erzeugen, wobei die durch das mindestens einachsige MEMS-Gyroskop (2) ermittelten Winkelgeschwindigkeiten (ω) zu einem Winkel (θ) integriert werden, und wobei die Einstellung mit einer Geschwindigkeit erfolgt, die es erlaubt, auch Einflüsse von Vibrationen des Fahrzeuges bei fahrendem Kraftfahrzeug zu kompensieren.

2. Verfahren nach Anspruch 1, wobei die optische Achse (12) in Abhängigkeit von einer durch nur ein Ein-Achsen-MEMS-Gyroskop (2a) ermittelten Winkelgeschwindigkeit (ω_{N}) eingestellt wird, wobei die Achse (3) des Ein-Achsen-MEMS-Gyroskops (2a) parallel zur Fahrzeugquerachse (4) liegt.

3. Verfahren nach Anspruch 1, wobei die optische Achse (12) in Abhängigkeit von durch ein Zwei-Achsen-MEMS-Gyroskop (2b) ermittelten Winkelgeschwindigkeiten (ω) eingestellt wird, wobei die durch die beiden Achsen des Zwei-Achsen-MEMS-Gyroskop (2b) aufgespannte Ebene parallel zur Fahrzeugquerachse (4) liegt.

4. Verfahren nach Anspruch 1, wobei die optische Achse (12) in Abhängigkeit von durch ein Drei-Achsen-MEMS-Gyroskop (2c) ermittelten Winkelgeschwindigkeiten (ω) eingestellt wird.

5. Verfahren nach einem der vorhergehenden Ansprüche, wobei die Winkelgeschwindigkeiten (ω) mittels einer vorab abgespeicherten Einbaulage des MEMS-Gyroskops (2) bezüglich der Kraftfahrzeugachsen (3) lagerichtig ermittelt werden.

6. Verfahren nach einem der vorhergehenden Ansprüche, wobei das durch das mindestens einachsige MEMS-Gyroskop (2) ermittelte Winkelgeschwindigkeitssignal (ω) mit Hilfe eines oder mehrerer Filter (34) um unerwünschte Signale reduziert wird, wobei die Filterung vor oder nach dem untergeordneten Verfahren nach Anspruch 5 erfolgen kann.

7. Verfahren nach einem der Ansprüche 1 bis 6, **dadurch gekennzeichnet, dass** die Einstellung der Winkellage (θ) der optischen Achse (12) des Scheinwerfers (14) durch die Steuerungseinheit (6) nach Kombination mit einer Steuerungsgröße und/oder Fahrzeugdaten durchgeführt wird, die aus alternativen Systemen zur Einstellung der Winkellage (θ) bereitgestellt werden.

8. Beleuchtungseinrichtung (11), die konfiguriert ist, ein Verfahren nach einem der Ansprüche 1 bis 7 auszuführen.

9. Beleuchtungseinrichtung (11) nach Anspruch 8, **dadurch gekennzeichnet, dass** das mindestens einachsige Gyroskop (2) auf einer Leiterplatte (31) der Steuerungseinheit (6) angeordnet ist.

10. Beleuchtungseinrichtung (11) nach Anspruch 8 oder 9, **dadurch gekennzeichnet, dass** die Steuerungseinheit (6) zur Anordnung an dem Scheinwerfer (14) ausgebildet ist.

11. Beleuchtungseinrichtung nach einem der Ansprüche 8 bis 10, **dadurch gekennzeichnet, dass** der Scheinwerfer ein Scheinwerfer ist, der ein digital mirror device oder ein liquid crystal display oder ein liquid crystal on silicon) oder mehrere hundert LEDs auf einem Chip oder ein Laser-scanning-System aufweist.

## Claims

1. Method for adjusting an angular position (Θ) of an optical axis (12) of a headlight (14) of a motor vehicle (1), wherein the method comprises a first method for statically adjusting a headlight range and a second method using a MEMS gyroscope (2), wherein in the first method, when the motor vehicle (1) is stationary, a level sensor (24) transmits a deflection of the motor vehicle (1) as a deflection signal (S8, S8a) to a control unit (6), wherein the control unit (6) calculates, from the deflection signals (S8, S8a), a control variable (SG) for adjusting the angular position (Θ) of the optical axis (12) of the headlight (14) relative to the roadway (16), wherein when the motor vehicle (1) starts moving, the second method is then carried out using the MEMS gyroscope, in which method the optical axis (12) of the headlight (14) is adjusted depending on an actual angular position (Θ) of the headlight (14) relative to the roadway (16), wherein the actual angular position (Θ) is determined depending on an angular velocity (ω) of the optical axis (12), wherein the angular velocity (ω) of the optical axis (12) is determined by means of the at least single-axis MEMS gyroscope (2) fixed with respect to the headlight (14), wherein the lighting device has at least one headlight which is designed to generate a high-resolution light distribution, wherein the angular velocities (ω) determined by the at least single-axis MEMS gyroscope (2) are integrated to form an angle (Θ), and wherein the adjustment is carried out at a speed which also allows the effects of vehicle vibrations to be compensated for when the motor vehicle is moving.

2. Method according to claim 1, wherein the optical axis (12) is adjusted depending on an angular velocity (ω_{N}) determined by only one single-axis MEMS gyroscope (2a), wherein the axis (3) of the single-axis MEMS gyroscope (2a) is parallel to the vehicle transverse axis (4).

3. Method according to claim 1, wherein the optical axis (12) is adjusted depending on angular velocities (ω) determined by a two-axis MEMS gyroscope (2b), wherein the plane spanned by the two axes of the two-axis MEMS gyroscope (2b) is parallel to the vehicle transverse axis (4).

4. Method according to claim 1, wherein the optical axis (12) is adjusted depending on angular velocities (ω) determined by a three-axis MEMS gyroscope (2c).

5. Method according to any of the preceding claims,
wherein the angular velocities (ω) are determined in the correct position with respect to the motor vehicle axles (3) by means of a previously stored installation position of the MEMS gyroscope (2).

6. Method according to any of the preceding claims,
wherein the angular velocity signal (ω) determined by the at least single-axis MEMS gyroscope (2) is reduced in terms of unwanted signals with the aid of one or more filters (34), wherein the filtering can take place before or after the subordinate method according to claim 5.

7. Method according to any of claims 1 to 6, **characterized in that** the adjustment of the angular position (Θ) of the optical axis (12) of the headlight (14) is carried out by the control unit (6) after combination with a control variable and/or vehicle data which are provided from alternative systems for adjusting the angular position (Θ).

8. Lighting device (11), which is designed to carry out a method according to any of claims 1 to 7.

9. Lighting device (11) according to claim 8, **characterized in that** the at least single-axis gyroscope (2) is arranged on a circuit board (31) of the control unit (6).

10. Lighting device (11) according to claim 8 or 9, **characterized in that** the control unit (6) is designed to be arranged on the headlight (14).

11. Lighting device according to any of claims 8 to 10, **characterized in that** the headlight is a headlight which has a digital mirror device or a liquid crystal display or a liquid crystal on silicon or several hundred LEDs on a chip or a laser scanning system.

## Revendications

1. Procédé de réglage d'une position angulaire (Θ) d'un axe optique (12) d'un projecteur (14) d'un véhicule automobile (1), le procédé comprenant un premier procédé pour le réglage statique d'une portée d'éclairage et un deuxième procédé utilisant un gyroscope MEMS (2), dans le cadre du premier procédé, sur le véhicule automobile (1) à l'arrêt, une compression de ressort du véhicule automobile (1) est transférée par un indicateur de niveau (24) sous la forme d'un signal de compression de ressort (S8, S8a) à une unité de commande (6), l'unité de commande (6) calculant à partir des signaux de compression de ressort (S8, S8a) une valeur de commande (SG) pour le réglage de la position angulaire (Θ) de l'axe optique (12) du projecteur (14) par rapport à la chaussée (16), le deuxième procédé étant alors mis en oeuvre lors d'un départ du véhicule automobile (1), en utilisant le gyroscope MEMS, l'axe optique (12) du projecteur (14) étant réglé en fonction d'une position angulaire réelle (Θ) du projecteur (14) par rapport à la chaussée (16), la position angulaire réelle (Θ) étant déterminée en fonction d'une vitesse angulaire (ω) de l'axe optique (12), la vitesse angulaire (ω) de l'axe optique (12) étant déterminée par le gyroscope MEMS (2) à au moins un axe, fixé par rapport au projecteur (14), le dispositif d'éclairage comprenant au moins un projecteur qui est agencé pour produire une répartition lumineuse à forte résolution, les vitesses angulaires (ω) déterminées par le gyroscope MEMS (2) à au moins un axe étant intégrées pour donner un angle (Θ), et le réglage étant effectué avec une vitesse qui permet de compenser aussi des influences provenant de vibrations du véhicule automobile lorsque celui-ci se déplace.

2. Procédé selon la revendication 1, l'axe optique (12) étant réglé en fonction de la vitesse angulaire (ω_{N}) déterminée par un gyroscope MEMS (2a) à un seul axe, l'axe (3) du gyroscope MEMS (2a) à un axe étant parallèle à l'axe transversal du véhicule (4).

3. Procédé selon la revendication 1, l'axe optique (12) étant réglé en fonction de vitesses angulaires (ω) déterminées par un gyroscope MEMS (2b) à deux axes, le plan défini par les deux axes du gyroscope MEMS à deux axes (2b) étant parallèle à l'axe transversal du véhicule (4).

4. Procédé selon la revendication 1, l'axe optique (12) étant réglé en fonction de vitesses angulaires (ω) déterminées par un gyroscope MEMS à trois axes (2c).

5. Procédé selon l'une quelconque des revendications précédentes, les vitesses angulaires (ω) étant déterminées conformément à la position, au moyen d'une position de montage du gyroscope MEMS (2) préalablement mémorisée, par rapport aux axes du véhicule automobile (3) .

6. Procédé selon l'une quelconque des revendications précédentes, le signal de vitesse angulaire (ω) émis par le gyroscope MEMS à au moins un axe (2) étant diminué, à l'aide d'un ou de plusieurs filtres (34), de signaux indésirables, le filtrage pouvant être effectué avant ou après le procédé selon la revendication dépendante 5.

7. Procédé selon l'une quelconque des revendications 1 à 6, **caractérisé en ce que** le réglage de la position angulaire (Θ) de l'axe optique (12) du projecteur (14) est effectuée par l'unité de commande (6) après une combinaison avec une valeur de commande et/ou des données du véhicule qui sont émises à partir de systèmes alternatifs pour le réglage de la position angulaire (Θ).

8. Dispositif d'éclairage (11) qui est configuré pour mettre en oeuvre un procédé selon l'une quelconque des revendications 1 à 7.

9. Dispositif selon la revendication 8, **caractérisé en ce que** le gyroscope à au moins un axe (2) est disposé sur une carte de circuit imprimé (31) de l'unité de commande (6).

10. Dispositif selon la revendication 8 ou 9, **caractérisé en ce que** l'unité de commande (6) est configurée pour être disposé au projecteur (14).

11. Dispositif selon l'une quelconque des revendications 8 à 10, **caractérisé en ce que** le projecteur est un projecteur qui comprend un dispositif matrice de miroirs ou un dispositif d'affichage à cristaux liquides ou un dispositif à cristaux liquides sur silicone ou plusieurs centaines de DEL sur une puce ou un système de scanner à laser.
